(19) Europäisches Patentamt
European Patent Office
Office européen des brevets

(11) **EP 3 074 467 B1**

(12) **EUROPÄISCHE PATENTSCHRIFT**

(45) Veröffentlichungstag und Bekanntmachung des Hinweises auf die Patenterteilung:
**18.07.2018 Patentblatt 2018/29**

(21) Anmeldenummer: **14802621.4**

(22) Anmeldetag: **19.11.2014**

(51) Int Cl.:
*C09C 1/00* (2006.01)   *C01B 33/12* (2006.01)
*B82Y 30/00* (2011.01)   *C07F 7/18* (2006.01)
*C09C 1/30* (2006.01)   *C09C 3/12* (2006.01)

(86) Internationale Anmeldenummer:
**PCT/EP2014/075012**

(87) Internationale Veröffentlichungsnummer:
**WO 2015/078745 (04.06.2015 Gazette 2015/22)**

(54) **OBERFLÄCHENMODIFIZIERTE PARTIKULÄRE METALLOXIDE**

SURFACE-MODIFIED PARTICULATE METAL OXIDES

OXYDES MÉTALLIQUES PARTICULAIRES MODIFIÉS EN SURFACE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2013 DE 102013224206**

(43) Veröffentlichungstag der Anmeldung:
**05.10.2016 Patentblatt 2016/40**

(73) Patentinhaber: **Wacker Chemie AG**
**81737 München (DE)**

(72) Erfinder: **SCHNEIDER, Achim**
**84489 Burghausen (DE)**

(74) Vertreter: **Fritz, Helmut et al**
**Wacker Chemie AG**
**Zentralbereich Patente, Marken und Lizenzen**
**Hanns-Seidel-Platz 4**
**81737 München (DE)**

(56) Entgegenhaltungen:
DE-A1-102007 055 879

**Beschreibung**

Die Erfindung betrifft Kieselsäuren, die mit einem Anteil von mindestens 15% T1-Gruppen oder einem Anteil an T1-Gruppen, der größer ist, als der Anteil T3-Gruppen, oberflächenmodifiziert sind, wobei sich der Anteil an T1-Gruppen auf der Oberfläche der Kieselsäure durch NMR-Spektroskopie im $^{29}$Si-CP/MAS-Modus bestimmen lässt und wobei der mit Lösungsmitteln extrahierbare Anteil der modifizierten Kieselsäuren höchstens 15 Gew.% beträgt, sowie ein Verfahren zur Herstellung dieser Kieselsäuren und deren Verwendung als rheologisches Additiv zum Einstellen der Viskosität, Fließgrenze und der scherverdünnenden sowie thixotropen Eigenschaften in Klebstoffen, Dichtstoffen und Beschichtungsstoffen wie beispielsweise Farben und Lacken.

Organofunktionelle partikuläre Metalloxide werden gemeinhin als aktive Füllstoffe zur Verbesserung der mechanischen Eigenschaften von Materialien verwendet, die vielfältig Einsatz finden. So kann hierdurch beispielsweise die Kratzfestigkeit von Beschichtungen wie Farben und Lacken verbessert oder die mechanischen Eigenschaften von Kleb- und Dichtstoffen gezielt variiert werden.

Darüber hinaus erfüllen die nanostrukturierten Füllstoffe aber auch bereits im unvernetzten Zustand der Matrix-Systeme eine überaus bedeutende Aufgabe. So weisen die Dispersionen häufig höhere Viskositäten und in vielen Fällen sogar viskoelastische Eigenschaften auf. Dieses pseudoplastische Verhalten spielt vor allem für den Verarbeitungsprozess der entsprechenden Materialien eine entscheidende Rolle. Durch eine gezielte chemische Oberflächenmodifizierung der partikulären Füllstoffe können die Wechselwirkungen mit der sie umgebenden Matrix und somit das viskoelastische Verhalten der Dispersion gesteuert werden.

WO 2008/077814 offenbart die Erzeugung organofunktioneller Harzschichten auf partikulären Metalloxiden mit großer spezifischer Oberfläche, die modifizierten partikulären Metalloxide und deren Verwendung. Die offenbarten Metalloxide zeichnen sich durch eine definierte organofunktionelle Silikonharzstruktur aus, deren spektroskopische Analyse aufgeführt ist. Dabei ist in den Beispielen 1 bis 5 die Summe der Intensitäten der T2- und T3-Gruppen mindestens um den Faktor 5 größer als die Intensität der T1-Gruppen, d.h. der Anteil an T1-Gruppen auf der Oberfläche des modifizierten Metalloxids bezogen auf die Summe T1+T2+T3, liegt in allen Fällen unter 15% und ist geringer als der Anteil an T3-Gruppen. Dementsprechend zeichnen sich die Metalloxide durch hochvernetzte Silikonharzschichten und eine geringe Verdickungswirkung in einem flüssigen Medium aus. Die in der Schrift WO 2008/077814 offenbarten Metalloxide sind daher besonders geeignet, um hohe Füllgrade zu erreichen.

Dagegen wurde in den Vergleichsbeispielen 6 und 7 der genannten WO 2008/077814 ein höherer Anteil an T1-Gruppen im Verhältnis zur Summe aller T-Gruppen gemessen, wobei für diese Metalloxide der extrahierbare Anteil mit 19,5 Gew.% bzw. 25,1 Gew.% hoch ist. Das beschriebene Verfahren arbeitet mit einem hohen Einsatz von Belegmittel, der sich aus der eingesetzten Stoffmenge Belegmittel bezogen auf die Oberfläche der Kieselsäure berechnet und im Bereich von 9 $\mu$mol/m$^2$ liegt. Die aus diesem Verfahren resultierenden Reaktionsprodukte mit geringem Kondensationsgrad weisen einen beträchtlichen Anteil an chemisch nicht fest angebundenen siliziumhaltigen Verbindungen auf, welcher bei der weiteren Verwendung der oberflächenbehandelten Metalloxide wie beispielsweise beim Einsatz als Additiv zur Rheologiesteuerung problematisch ist.

Das Dokument DE 10 2007 055879 A1 offenbart oberflächenmodifizierte Kieselsäuren, die mit weniger als 10% T1-Gruppen modifiziert sind, und zur Steuerung der Fließeigenschaften von Beschichtungen, Kleb- oder Dichtstoffen eingesetzt werden.

Das in DE 10 2007 055879 A1 beschriebene Verfahren lässt den Einsatz eines Katalysators als Alternative zu, schränkt dessen Konzentration in der Modifizierungsreaktion aber nicht auf einen konkreten Wert ein und beschreibt nicht die Auswirkungen auf das Produkt in Bezug auf T1-, T2- oder T3-Gruppen bei Einsatz unterschiedlicher Katalysatormengen.

Das Dokument DE 10 2007 033448 A1 offenbart oberflächenmodifizierte Kieselsäuren, wobei der Anteil der Summe der NMR-Signalintensitäten der T1- und T2-Gruppen an der Gesamtsignalintensität der T-Gruppen T1+T2+T3 mindestens 20% beträgt, d.h. es gilt F(T1+T2)≥20%. Der Anteil an T1-Gruppen ist in den Beispielen nicht separat angegeben, daher kann nicht auf das Verhältnis der T1- zu T2- oder T3-Gruppen geschlossen werden. Für die Beispiele 2 und 5 muss F(T1) =0 bzw. ≤5% sein, da F(T1+T2) =0% bzw. 5% beträgt. Für die Beispiele 11, 3, 4 und 7 wurde experimentell ebenso ein Anteil an T1-Gruppen von 0% gemessen. Für Beispiel 6 wurde F(T1) experimentell mit 12% bestimmt.

Im in DE 10 2007 033448 A1 beschriebenen Verfahren ist die Zugabe eines Hilfsstoffs nicht notwendig, da entsprechend Absatz [0019] immer aminofunktionelle Silane der allgemeinen Formel II ($X_{1+n}$Si(OR$^1$)$_{2-n}$-R$^2$-NR$^3_2$) eingesetzt werden. Bei diesen wirkt die Aminogruppe als Autokatalysator. Da die autokatalytische Funktion eine Funktion des eingesetzten Silans ist, liegt diese immer in der gleichen Konzentration wie das Silan vor. Es ist daher nicht möglich, diese katalytische Funktion in einer unterstöchiometrischen Menge einzusetzen. Auch DE 10 2007 033448 A1 lässt darüber hinaus den zusätzlichen Einsatz eines Katalysators als Alternative zu, schränkt dessen Konzentration in der Modifizierungsreaktion aber nicht auf einen konkreten Wert ein.

Aufgabe der Erfindung ist es, die Nachteile des gegenwärtigen Stands der Technik zu überwinden und Kieselsäuren zur Verfügung zu stellen, die sich durch ein möglichst hohes Verdickungsniveau auszeichnen und daher besonders gut als Additiv zur Rheologiesteuerung eingesetzt werden können, sowie ein Verfahren zur Herstellung dieser Kieselsäuren.

Diese Aufgabe wird durch die Bereitstellung von Kieselsäuren gelöst, die mit Gruppen ausgewählt aus einer oder mehreren der Gruppen mit der allgemeinen Formel $RSi(OX)(OX')O_{1/2}$ (T1), $R'Si(OX'')(O_{1/2})_2$ (T2) und $R''Si(O_{1/2})_3$ (T3) modifiziert sind, wobei R, R', R'' ein aliphatischer oder aromatischer Kohlenwasserstoffrest mit 1 bis 24 C-Atomen und X, X' und X'' Wasserstoff, ein aliphatischer oder aromatischer Kohlenwasserstoffrest mit 1 bis 24 C-Atomen ist und R, R', R'', X, X' und X'' gleich oder verschieden sein können und wobei der Anteil an T1-Gruppen auf der Oberfläche der modifizierten Kieselsäure bezogen auf die Summe T1+T2+T3, mindestens 15% beträgt, oder der Anteil an T1-Gruppen auf der Oberfläche der modifizierten Kieselsäure größer ist als der Anteil an T3-Gruppen auf der Oberfläche der modifizierten Kieselsäure, der sich durch NMR-Spektroskopie im $^{29}$Si-CP/MAS-Modus bestimmen läßt, und wobei der mit Lösungsmitteln extrahierbare Anteil der modifizierten Kieselsäure höchstens 15 Gew.% beträgt.

Die erfindungsgemäßen partikulären nanostrukturierten Kieselsäuren weisen an ihrer Oberfläche trifunktionelle Gruppen auf, bei der das Silizium-Atom an drei Sauerstoff-Atome gebunden ist. Diese trifunktionelle Einheit wird auch mit T bezeichnet und umfasst T1-Gruppen mit der Formel $RSi(OX)(OX')O_{1/2}$, T2-Gruppen mit der Formel $R'Si(OX'')(O_{1/2})_2$ und T3-Gruppen mit der Formel $R''Si(O_{1/2})_3$. Die Gesamtheit der T-Gruppen wird auch mit der allgemeinen Formel $RSiO_{3/2}$ bezeichnet.

Die Reste R, R', R'' werden ausgewählt aus der Gruppe der einwertigen, gegebenenfalls einfach oder mehrfach ungesättigten, gegebenenfalls verzweigten Kohlenwasserstoffreste mit 1 bis 24 C-Atomen, die gegebenenfalls weitere Heteroatome und/oder funktionelle Gruppen aufweisen. Bevorzugt handelt es sich um Alkyl- oder Arylreste wie Methyl-, Ethyl-, Propyl-, wie n-Propyl- oder i-Propyl-, Butyl-, wie n-Butyl-, i-Butyl- oder t-Butyl, Hexylwie n-Hexyl- oder i-Hexyl-, Octyl- wie n-Octyl- oder i-Octyl-, Dodecyl-, Tetradecyl-, Hexadecyl-, Octadecyl-, Phenyl-, Tolyl-, wie o-Tolyl-, m-Tolyl- oder p-Tolyl-, Xylyl-, Mesityl- oder Naphtyl-Gruppen.

Der Alkyl- oder Arylrest kann darüber hinaus auch weitere Heteroatome oder funktionelle Gruppen aufweisen. Bevorzugt sind hierbei einwertige organische Gruppen der allgemeinen Formel $R = (CH_2)_nY$ mit n = 1 bis 24 und dem Rest Y ausgewählt aus einer Vinyl-, Acrylat-, Methacrylat-, Glycidoxy-, SH- oder OH-Gruppe, einem primären Aminrest $-NH_2$, einem sekundären Aminrest -NHR wie N-Monomethyl-, N-Monoethyl-, N-Monopropyl-, N-Monobutyl-, N-Cyclohexyl- oder Anilinorest, einem tertiären Aminrest $-NR_2$ wie N,N-Dimethyl-, N,N-Diethyl-, N,N-Dipropyl-, N,N-Dibutyl-, N,N-Methylethyl-, N,N-Methylpropyl-, N,N-Ethylpropyl- oder N,N-Methylphenylrest, Morpholino-, Pyrrolyl-, Indolyl-, Pyrazolyl-, Imidazolyl- oder Piperidylrest, einem quartären Aminrest wie der N,N,N-Trimethylammonium-, N,N,N-Triethylammonium- oder N,N,N-Tripropylammoniumrest, Phosphonato-, $-P(O)(OR^{\#})_2$($R^{\#}$ ausgewählt aus einer Methyl-, Ethyl- oder Phenylgruppe), Isocyanato- oder geschützte Isocyanato-Gruppe -N(H)C(O)G, wobei die Schutzgruppe G bei thermischer Belastung abgespalten wird als H-G (H-G = 2-Hydroxybenzoesäuremethylester, 2-Hydroxypyridin, 1-Hydroxymethyl-1,2,4-Triazol, N,N-Diethylhydroxylamin, 2-Butanonoxim, Malonsäuredimethylester, Acetessigsäureethylester, Diisopropylamin, Benzyl-tert.-butylamin, Tert.-butylmethylamin, Tert.-Butylisopropylamin, 2-Isopropylimidazol, 3,5-Dimethylpyrazol und ε-Caprolactam) oder Dihydro-3-yl-2,5-furandion.

Besonders bevorzugt handelt es sich bei R, R' und/oder R'' um eine Tetradecyl-, Hexadecyl-, Octadecyl-, Methacryloxypropyl- oder Glycidoxypropylgruppe.

Die individuellen Reste X, X' und X'' sind aus den oben für R, R', R'' definierten Gruppen oder Wasserstoff ausgewählt und können unterschiedlich oder gleich sein. Bevorzugt sind die Sauerstoffgebundenen Reste der T-Gruppe gleich. Besonders bevorzugt handelt es sich bei den Sauerstoffgebundenen Resten der T-Gruppe um Wasserstoff.

T-Gruppen auf der Oberfläche der Kieselsäure (mit der allgemeinen Formel $RSiO_{3/2}$, s.o.) können verschiedene Reste R tragen, so könnten sich beispielsweise zwei an die Oberfläche gebundene T1-Gruppen in der Länge ihrer C-Ketten unterscheiden. Bevorzugt ist die Oberfläche der Kieselsäure ausschließlich mit einer Art der oben genannten Gruppen R modifiziert.

Bei einer T1-Einheit ($RSi(OX)(OX')O_{1/2}$) bildet ein Sauerstoffatom eine Siloxanbindung zu einem anderen Siliziumatom aus und es erfolgt somit eine Anbindung der Gruppe an die Oberfläche der Kieselsäure oder eine T2- bzw. T3-Gruppe. Die anderen beiden Sauerstoffatome tragen mit X und X' ein Wasserstoffatom oder einen Kohlenwasserstoffrest. Somit stellt eine T1-Gruppe eine nicht vernetzte Endgruppe dar. Dagegen stehen bei T2-Gruppen ($R'Si(OX'')(O_{1/2})_2$) zwei O-Atome zum Aufbau kettiger Strukturen und bei T3-Gruppen ($R''Si(O_{1/2})_3$) drei O-Atome für die Vernetzungsreaktion zur Verfügung. Entsprechend zeigt ein höherer Anteil an T1-Gruppen bezogen auf die Summe aller T-Gruppen auf der Oberfläche der Kieselsäure einen geringeren Vernetzungsgrad der T-Gruppen an. Der Anteil an T1-Gruppen auf der Oberfläche der erfindungsgemäßen modifizierten Kieselsäuren bezogen auf die Summe T1+T2+T3 beträgt mindestens 15%, vorzugsweise mindestens 20%, besonders bevorzugt mindestens 30% oder ist größer als der Anteil an T3-Gruppen. Bevorzugt beträgt der Anteil an T1-Gruppen bezogen auf die Summe aller T-Gruppen auf der Oberfläche der Kieselsäure weniger als 100%.

Die erfindungsgemäßen Kieselsäuren zeichnen sich entsprechend durch einen geringen Kondensationsgrad der siliziumorganischen Modifizierungsschicht aus. Wie in den Beispielen belegt, weisen diese eine hohe Verdickungswirkung in polaren organischen Systemen wie bspw. Epoxidharzen aus.

Der Anteil an T1-Gruppen auf der Oberfläche der Kieselsäure kann beispielsweise durch $^{29}$Si-CP/MAS-NMR-Spektroskopie bestimmt werden, wie dies beispielsweise in G. E. Marciel et al. Journal of Chromatography. 1981, 205, 438ff beschrieben wird. Die chemische Verschiebung der Signale gibt Aufschluss über die Konnektivität der den Signalen zugehörigen Silizium-haltigen Gruppen wie z.B. in G. Engelhardt et al. Polymer Bulletin, 1981, 5, 557ff dargelegt wird. Die hier verwendeten Bezeichnungen T1, T2 und T3 sind aufgrund der chemischen Verschiebung jeweils Silyl-Gruppen der allgemeinen Formeln $RSi(OX)(OX')O_{1/2}$, $R'Si(OX'')(O_{1/2})_2$ bzw. $R''Si(O_{1/2})_3$ zuzuordnen, wobei R, R', R'', sowie X, X' und X'' die oben genannte Bedeutung innehaben, X, X' sowie X'' ebenfalls einen einwertigen Alkyl- oder Arylrest oder auch Wasserstoff repräsentiert und die freien Valenzen der Gruppen (ausgedrückt im Anteil $O_{1/2}$) jeweils wie oben ausgeführt über eine Siloxanbindung an weitere Siliziumatome abgesättigt werden.

Als erfindungsgemäßes Metalloxid wird Kieselsäure eingesetzt. Kieselsäure im Sinne der Erfindung meint Sauerstoffsäuren des Siliziums und umfasst Fällungskieselsäure und pyrogene Kieselsäure. Die als Silikate bezeichneten Salze der Säuren sind nicht umfasst. Insbesondere bevorzugt handelt es sich bei der Kieselsäure um pyrogen hergestellte Kieselsäure.

Die erfindungsgemäßen Kieselsäuren können spezifische Oberflächen von 1 bis 600 $m^2$/g, bevorzugt 40 bis 400 $m^2$/g und besonders bevorzugt 90 bis 270 $m^2$/g aufweisen (bestimmt nach der BET Methode nach DIN 9277/66131 und 9277/66132).

Die Stampfdichten der erfindungsgemäßen Kieselsäuren können im Bereich von 10 bis 200 g/l, vorzugsweise 20 bis 100 g/l, besonders bevorzugt 20 bis 60 g/l liegen (bestimmt nach DIN EN ISO 787-11).

Die erfindungsgemäßen Kieselsäuren zeichnen sich dadurch aus, dass die durch die Modifizierung eingeführten Gruppen fest an die Oberfläche der Kieselsäure gebunden sind. Eine feste Bindung steht für eine gute chemische Anbindung und wird erfindungsgemäß durch den mit Lösungsmitteln extrahierbaren Anteil der modifizierten Kieselsäure quantifiziert, der höchstens 15 Gew.% beträgt. Bevorzugt beträgt der extrahierbare Anteil höchstens 6 Gew.%, besonders bevorzugt höchstens 3 Gew.%, insbesondere bevorzugt höchstens 2 Gew.% und in einer speziellen Ausführungsform der Erfindung höchstens 1 Gew.%. Eine geeignete Methode zur Bewertung der Bindungsfestigkeit einer Modifizierung ist die quantitative Bestimmung von extrahierbarem, d.h. nicht chemisch an der Oberfläche der Kieselsäure gebundenem Silan.

Demzufolge zeichnen sich die erfindungsgemäßen Kieselsäuren nicht nur durch ihren geringen Kondensationsgrad der siliziumorganischen Modifizierungsschicht aus, sondern gleichzeitig auch durch die feste chemische Bindung der Oberflächengruppen an die Kieselsäure.

Ein Lösungsmittel (auch Lösemittel oder Solvens) ist ein Stoff, der Gase, Flüssigkeiten oder Feststoffe lösen oder verdünnen kann, ohne dass es dabei zu chemischen Reaktionen zwischen gelöstem Stoff und lösendem Stoff kommt. Auch das zur Untersuchung der erfindungsmäßigen Kieselsäuren eingesetzte Lösungsmittel Tetrahydrofuran löst keine chemischen Bindungen der Modifizierungsmittel zur Oberfläche der Kieselsäure. Die hiermit extrahierbaren Bestandteile sind also lediglich durch schwächere Wechselwirkungen wie beispielsweise Van-der-Waals-Kräfte mit der Kieselsäure verbunden.

Ein niedriger Messwert für den extrahierbaren Anteil weist auf eine bessere chemische, also festere Anbindung des Modifizierungsmittels auf der Oberfläche der Kieselsäure hin.

Bevorzugt weisen die erfindungsgemäßen Kieselsäuren eine möglichst vollständige Modifizierung der Oberfläche auf. Vollständig bedeutet in diesem Zusammenhang, dass der bevorzugte Beleggrad mindestens 2 $\mu$mol/$m^2$ der Oberfläche der Kieselsäure beträgt, d.h. dass mindestens 2 $\mu$mol/$m^2$ der Oberfläche der Kieselsäure mit Modifizierungsagens (gleichbedeutend mit Belegmittel) belegt sind. Einen ersten Hinweis auf den Modifizierungs- oder Beleggrad lässt sich aus dem ermittelten Kohlenstoffgehalt ableiten, woraus sich unter Kenntnis der chemischen Struktur der Modifizierung und der mittels BET Methode (s.o.) gemessenen spezifischen Oberfläche der unmodifizierten Kieselsäure der Beleggrad in $\mu$mol/$m^2$ Oberfläche der Kieselsäure errechnen lässt. Der Beleggrad der erfindungsgemäßen Kieselsäuren beträgt 2 bis 6, bevorzugt 2 bis 4 $\mu$mol/$m^2$ und besonders bevorzugt 2,5 bis 3,5 $\mu$mol/$m^2$ Oberfläche der Kieselsäure.

Wenn es sich bei der Kieselsäure um pyrogene Kieselsäure handelt, lässt sich der Modifizierungsgrad beispielsweise auch durch eine geeignete Methode zur Bestimmung des Rest-Silanolgehalts nach der Modifizierung durch Säure-Base-Titration überprüfen, wie z.B. beschrieben in G.W. Sears et al. Analytical Chemistry 1956, 28, 1981ff.

Die erfindungsgemäßen Kieselsäuren sind bevorzugt dadurch gekennzeichnet, dass sie einen Rest-Silanolgehalt von kleiner 70%, besonders bevorzugt von kleiner 40% und insbesondere bevorzugt von kleiner 25% aufweisen

Ein weiterer Gegenstand der vorliegenden Erfindung betrifft ein Verfahren zur Oberflächenmodifizierung der beanspruchten Kieselsäuren, wobei zunächst eine Kieselsäure mit einem Modifizierungsagens intensiv gemischt wird, die Kieselsäure dann mit dem Modifizierungsagens in einem Gasphasenprozess reagiert und anschließend von überschüssigem Modifizierungsagens und Nebenprodukten gereinigt wird,

wobei das Modifizierungsagens ausgewählt wird aus einem Silan der allgemeinen Formel $RSiZ_3$, $R_2SiZ_2$ und/oder $R_3SiZ$ allein oder beliebigen Gemischen davon,

wobei Z eine reaktive Gruppe wie beispielsweise Hydroxy, Halogen, Aminreste, $OR^X$, $OC(O)R^X$, $O(CH_2)_mOH$ oder

$O(CH_2)_mOR^X$ bedeutet, R und $R^X$ Kohlenwasserstoffreste mit 1 bis 24 C-Atomen und m=1-24 ist,

wobei 0,5 bis 7 μmol Modifizierungsagens pro $m^2$ spezifischer Oberfläche der zu modifizierenden Kieselsäure zur Modifizierung eingesetzt werden

und wobei bei der Reaktion der Kieselsäure mit dem Modifizierungsagens Hilfsstoff in einer Menge von weniger als 3 μmol pro $m^2$ der Oberfläche der zu modifizierenden Kieselsäure zugesetzt wird.

Wie bereits eingangs für die erfindungsgemäßen Kieselsäuren ausgeführt gilt auch für $RSiZ_3$ (gleichbedeutend mit $R^1SiZ^1Z^2Z^3$), $R_2SiZ_2$ (gleichbedeutend mit $R^2R^3SiZ^4Z^5$) und $R_3SiZ$ (gleichbedeutend mit $R^4R^5R^6SiZ^6$), dass R und Z die individuellen Reste $R^1$ bis $R^6$, sowie $Z^1$ bis $Z^6$ beschreiben. Diese sind aus den oben für R und Z definierten Gruppen ausgewählt und können unterschiedlich oder gleich sein. Bevorzugt sind die für R und/oder Z ausgewählten Gruppen gleich.

Besonders bevorzugt handelt es sich beim Belegmittel um Monoalkyltrialkoxysilane wie beispielsweise Tetradecyl-, Hexadecyl-, Octadecyl-, Methacryloxypropyl-, Glycidoxypropyltrimethoxysilan oder die entsprechenden Ethoxyderivate Tetradecyl-, Hexadecyl-, Octadecyl-, Methacryloxypropyl- oder Glycidoxypropyltriethoxysilan. Darüber hinaus können in einer weiteren bevorzugten Ausführung der Erfindung Alkyltrichlorsilane wie z.B. Tetradecyl-, Hexadecyl-, Octadecyl-, Methacryloxypropyl- oder Glycidoxypropyltrichlorsilan zum Einsatz kommen.

Die erfindungsgemäßen Kieselsäuren können mit ausschließlich einem der oben genannten Belegmittel modifiziert sein, es kann aber auch eine Mischung von zwei oder mehreren der genannten Belegmittel eingesetzt werden.

Im Verfahren werden 0,5 bis 7 μmol Modifizierungsagens pro $m^2$ spezifischer Oberfläche der zu modifizierenden Kieselsäure, bevorzugt 1 bis 5 μmol, besonders bevorzugt 2 bis 4 μmol und insbesondere bevorzugt 2,4 bis 3,3 μmol Modifizierungsagens pro $m^2$ spezifischer Oberfläche der zu modifizierenden Kieselsäure zur Modifizierung eingesetzt.

Die oberflächenmodifizierte Kieselsäure wird mittels eines Verfahrens hergestellt, bei dem der Herstellungsprozess in getrennten Schritten erfolgt. Diese umfassen (1) intensive Mischung der Kieselsäure mit den Modifizierungsagenzien (Belegung), (2) Reaktion der Kieselsäure mit dem Belegmittel und (3) Reinigung der modifizierten Kieselsäure von überschüssigem Modifizierungsagens und Nebenprodukten.

Im Sinne der Erfindung handelt es sich bei den Begriffen "Modifizierungsagens" und "Belegmittel" oder "Belegungsmittel" um Synonyme.

Die Oberflächenmodifizierung (Reaktion) wird bevorzugt in einer Atmosphäre durchgeführt, die nicht zur Oxidation der oberflächenmodifizierten Kieselsäure führt, d.h. bevorzugt weniger als 10 Vol.% Sauerstoff, besonders bevorzugt weniger als 2,5 Vol.%, beste Ergebnisse werden erzielt bei weniger als 1 Vol.% Sauerstoff.

Der Druck während der Verfahrensschritte reicht von schwachem Unterdruck von 0,2 bar bis zum Überdruck von 100 bar, wobei aus technischen Gründen Normaldruck, das heißt druckfreies Arbeiten gegenüber Außen-/Atmosphären-Druck bevorzugt ist.

Gegebenenfalls können protische Lösungsmittel hinzugefügt werden. Von einem protischen Lösungsmittel spricht man, wenn ein Molekül über eine funktionelle Gruppe verfügt, aus der Wasserstoffatome im Molekül als Protonen abgespalten werden können (Dissoziation). Aufgrund der hohen Polarität der OH-Bindung kann diese unter Abspaltung eines positiv geladenen Wasserstoffatoms, dem Proton, vergleichsweise einfach gespalten werden.

Das wichtigste protische Lösungsmittel ist Wasser, das (vereinfacht) in ein Proton und ein Hydroxid-Ion dissoziiert. Weitere protische Lösungsmittel stellen z. B. Alkohole und Carbonsäuren dar. Erfindungsgemäß können als protische Lösungsmittel beispielsweise flüssige oder verdampfbare Alkohole wie isoPropanol, Ethanol oder Methanol oder Wasser zugesetzt werden. Es können auch Gemische der oben genannten protischen Lösungsmittel zugefügt werden. Vorzugsweise werden 1 bis 50 Gew.% an protischen Lösungsmittel bezogen auf die Kieselsäure zugefügt, besonders bevorzugt 5 bis 25 Gew.%. Besonders bevorzugt ist die Zugabe von Wasser als protischem Lösungsmittel. Durch Zugabe einer größeren Wassermenge während der Modifizierungsreaktion ist das Produkt dadurch gekennzeichnet, dass es sich bei X überwiegend um Wasserstoffgruppen und seltener um Alkylgruppen handelt.

Die erfindungsgemäße Modifizierungsreaktion erfolgt in einem Gasphasenprozess, d.h. das Belegmittel wird der reinen, weitestgehend trockenen (daher pulverförmigen) Kieselsäure zugefügt. Im Gegensatz dazu würde die Kieselsäure in einem Flüssigphasenprozess in flüssiger Phase vorgelegt werden.

Die Modifizierungsagenzien (Belegmittel) werden der Kieselsäure bevorzugt in flüssiger Form zugefügt. Die Modifizierungsagenzien können dabei in reiner Form oder als Lösungen in bekannten technisch eingesetzten Lösungsmitteln beispielsweise Alkoholen wie z.B. Methanol, Ethanol, oder i-Propanol, Ethern wie z.B. Diethylether, Tetrahydrofuran, oder Dioxan, oder Kohlenwasserstoffen wie z.B. Hexanen oder Toluol zugemischt werden. Die Konzentration der Modifizierungsagenzien in der Lösung beträgt dabei 5 bis 95 Gew.%, bevorzugt 30 bis 95 Gew.%, besonders bevorzugt 50 bis 95 Gew.%.

Erfindungsgemäß werden die Mengen der flüssigen Bestandteile so gewählt, dass es sich bei der Reaktionsmischung stets um eine trockene Pulverschüttung handelt. Trockene Pulverschüttung bedeutet in diesem Zusammenhang, dass die Mischung im Wesentlichen als Feststoff (Kieselsäurepartikel) in der Gasphase vorliegt. Flüssigkeiten werden nur in den geringen Mengen zugesetzt, in denen sie unbedingt notwendig sind, z.B. als Reaktionspartner, Hilfsstoff zur Verringerung der Reaktionstemperaturen bzw. -zeiten oder als Lösemittel zur Einstellung der für die Verdüsung anderer Reaktionspartner oder Hilfsstoffe notwendigen Viskosität. Demgegenüber steht die Prozessführung in flüssiger Phase, d.h. der Umsetzung einer in flüssiger Phase dispergierter Kieselsäure.

Um zu gewährleisten, dass die Reaktionsmischung als trockene Pulverschüttung vorliegt, übersteigen die eingesetzten Gewichtsmengen flüssiger Bestandteile nicht die Gewichtsmenge der eingesetzten Kieselsäure. Bevorzugt werden 5 bis 50, besonders bevorzugt 20 bis 35 Gewichtsteile flüssiger Bestandteile bezogen auf 100 Teile der Kieselsäure eingesetzt.

Zur Herstellung der erfindungsgemäßen Kieselsäuren kommen darüber hinaus Stoffe zum Einsatz, die es ermöglichen die für die Reaktion der Kieselsäure mit dem Modifizierungsagens notwendigen Reaktionszeiten zu verkürzen und/oder die notwendigen Prozesstemperaturen zu erniedrigen. Diese Stoffe werden im Folgenden mit dem Begriff Hilfsstoffe bezeichnet. Überraschenderweise wurde festgestellt, dass die Menge an Hilfsstoffen so gering gewählt werden kann, dass bei der Modifizierungsreaktion ein hoher Anteil an T1-Gruppen auf der Oberfläche der modifizierten Kieselsäure bezogen auf die Summe T1+T2+T3 oder ein Anteil an T1-Gruppen, der größer ist als der Anteil an T3-Gruppen, erzeugt wird und die Gruppen gleichzeitig fest an die Oberfläche der Kieselsäure gebunden sind. Dass eine gute chemische Anbindung stattgefunden hat, kann wiederum dadurch nachgewiesen werden, dass der mit Lösungsmitteln extrahierbare Anteil der modifizierten Kieselsäure gering ist.

So beträgt die Menge des Hilfsstoffs im erfindungsgemäßen Verfahren bis zu 3 $\mu$mol pro m$^2$ (absoluter) Oberfläche der zu modifizierenden Kieselsäure. Bevorzugt werden 0,5 bis 2,5 $\mu$mol Hilfsstoff pro m$^2$ Oberfläche der zu modifizierenden Kieselsäure eingesetzt. Die absolute Oberfläche der unmodifizierten Kieselsäure kann wiederum aus dessen Masse und der nach der BET Methode (s.o.) gemessenen spezifischen Oberfläche errechnet werden.

Bevorzugt handelt es sich beim erfindungsgemäßen Hilfsstoff um Stoffe, welche basisch reagierende funktionelle Gruppen aufweisen. Diese umfassen beispielsweise Hydroxide von Alkali- und Erdalkalimetallen, wie z.B. Kaliumhydroxid und Natriumhydroxid sowie auch deren aus den entsprechenden Alkoholen oder Carbonsäuren abgeleiteten Salze, z.B. Natriummethanolat, Natriumethanolat oder Natriumacetat. Des Weiteren können die basisch reagierenden Verbindungen gewählt sein aus stickstoffhaltigen Verbindungen wie Ammoniak oder organisch substituierten primären, sekundären oder tertiären Aminen. Die einwertigen organischen Substituenten der genannten Alkohole, Carbonsäuren und Amine umfassen gesättigte und ungesättigte, verzweigte sowie unverzweigte Kohlenwasserstoffreste, die darüber hinaus auch weitere Heteroatome oder funktionelle Gruppen aufweisen können. Die basisch reagierenden Verbindungen können in Substanz aber auch als Lösung in inerten oder reaktiven Lösemitteln zugesetzt werden. Bevorzugt werden wässrige Natron- oder Kalilauge, wässrige Ammoniak-Lösung, i-Propylamin, n-Butylamin, i-Butylamin, t-Butylamin, Cyclohexylamin, Triethylamin, Morpholin, Piperidin oder Pyridin eingesetzt. Durch Variation der chemischen Natur des eingesetzten Hilfsstoffs, sowie dessen Menge relativ zur absoluten Oberfläche des eingesetzten Metalloxids lässt sich der Vernetzungsgrad der Silikonharzschicht in einem sehr breiten Bereich steuern. Wie die Beispiele zeigen, führt die Verringerung der Menge des Hilfsstoffs zu einem Produkt mit geringerem Vernetzungsgrad, was sich auch in einer Zunahme der Verdickungswirkung des Produktes bemerkbar macht. Vergleicht man Beispiel 4 mit 3, so führte die Verringerung der Menge an Hilfsstoff, in diesem Fall wässriger Ammoniaklösung, zu einem Produkt mit einem erhöhten Anteil an T1-Gruppen und erhöhter Verdickungswirkung. Diese Tendenz wurde auch für andere Belegmittel (Beispiel 7 verglichen mit Beispiel 6 oder Beispiel 9 versus 8), sowie für einen anderen Hilfsstoff, in diesem Fall Triethylamin (Beispiel 11 versus 10), beobachtet.

Es war besonders überraschend, dass hierbei bereits der Einsatz deutlich unterstöchiometrischer Mengen des Hilfsstoffs eine nahezu quantitative, chemisch feste Anbindung der Modifikation an die Kieselsäure verursacht. Dagegen wurde bei Verzicht auf den Einsatz eines Hilfsstoffs ein deutlich erhöhter extrahierbarer Anteil von 4,9 Gew.% (Beispiel 5) im Vergleich zu nur ca. 1 Gew.% (Beispiele 1-4) bei Einsatz von wässriger Ammoniaklösung als Hilfsstoff festgestellt, was sich bei Beispiel 5 gegenüber Beispiel 4 unter anderem in einer vergleichsweise geringen Verdickungswirkung bemerkbar macht und wie oben dargelegt darüber hinaus auch andere technische Nachteile mit sich bringen kann. So beträgt die Viskosität der Dispersion ohne Zugabe von Hilfsstoffen 6,92 Pa*s, dagegen bei Zugabe von 0,6 $\mu$mol wässriger Ammoniaklösung 8,57 Pa*s (Beispiel 4). Mit von Beispiel 3 zu Beispiel 4 abnehmender Menge Hilfsstoff, in diesem Fall wässriger Ammoniaklösung, wird ein Anstieg der Viskosität beobachtet.

Bevorzugt werden die Belegmittel als feinstverteiltes Aerosol zugefügt, dadurch gekennzeichnet, dass das Aerosol eine Sinkgeschwindigkeit von 0,1 bis 20 cm/s aufweist. Ein Aerosol ist ein Gemisch (Dispersion) aus festen oder flüssigen Schwebeteilchen und einem Gas.

Die Belegung der Kieselsäure mit den genannten Modifizierungsagenzien geschieht vorzugsweise durch Düsentechniken oder vergleichbare Techniken. Effektive Verdüsungstechniken können beispielsweise das Verdüsen in 1-Stoffdüsen unter Druck (vorzugsweise bei 5 bis 20 bar), Versprühen in 2-Stoffdüsen unter Druck (vorzugsweise mit Gas und Flüssigkeit bei 2-20 bar), Feinstverteilung mit Atomizern oder Gas-Feststoff-Austauschaggregaten mit beweglichen, rotierenden oder statischen Einbauten sein, die eine homogene Verteilung der Belegmittel mit der pulverförmigen Kieselsäure erlauben.

Das Aerosol kann über Düsen von oben auf den in Bewegung versetzten pulverförmigen Feststoff aufgebracht, wobei sich die Düsen oberhalb des Fluid-Spiegels befinden und von der homogenen Gasphase umgeben sind, oder in den fluidisierten Feststoff hinein, wobei sich die Dosieröffnungen unterhalb des Fluidspiegels befinden und demzufolge vom heterogenen Partikel/GasGemisch umgeben sind, eingebracht werden. Bevorzugt ist Verdüsung von oben.

Die Zugabe der Silane und der als Hilfsstoff fungierenden basisch reagierenden Verbindungen kann gleichzeitig oder nacheinander erfolgen. Bevorzugt erfolgt zuerst eine homogene Belegung der Kieselsäure mit dem Hilfsstoff und anschließend die Belegung mit dem Silan.

Die Reaktion (Schritt 2) erfolgt bevorzugt bei Temperaturen von 30 °C bis 350 °C, bevorzugt 40 °C bis 250 °C, im besonderen bevorzugt 50 °C bis 150 °C; in einer speziellen Ausführung erfolgt der Reaktionsschritt bei 100 °C bis 120 °C. Der Temperaturverlauf kann während der Reaktion konstant gehalten werden oder, wie in EP 1 845 136 beschrieben, einen ansteigenden Gradienten aufweisen.

Die Verweilzeit der Reaktion (Schritt 2) beträgt bevorzugt 1 min bis 24 h, besonders bevorzugt 15 min bis 300 min und aus Gründen der Raumzeitausbeute insbesondere bevorzugt 15 min bis 240 min.

Belegung (1) und Reaktion (2) erfolgen vorzugsweise unter mechanischer oder Gas-getragener Fluidisierung. Während bei der mechanischen Fluidisierung das partikuläre Pulver durch Bewegung eines Körpers (beispielsweise eines Rührflügels) in der Schüttung bzw. dem Fluid in den fluiden Zustand versetzt wird, wird dies im Falle der Gas-getragenen Fluidisieung lediglich durch Einleiten eines Gases vorzugsweise von unten (z.B. in einer Wirbelschicht) erreicht. Eine Gas-getragene Fluidisierung kann durch alle inerten Gase erfolgen, die nicht mit den Modifizierungsagenzien, der Kieselsäure und der modifizierten Kieselsäure reagieren, also nicht zu Nebenreaktionen, Abbaureaktionen, Oxidationsvorgängen und Flammen- und Explosionserscheinungen führen. Vorzugsweise finden hier Stickstoff, Argon und andere Edelgase sowie Kohlenstoffdioxid Verwendung. Die Zuführung der Gase zur Fluidisierung erfolgt bevorzugt im Bereich von Gasleerrohrgeschwindigkeiten von 0,05 bis 5 cm/s, besonders bevorzugt von 0,5 bis 2,5 cm/s. Unter dem Begriff Gasleerrohrgeschwindigkeit ist der Quotient aus dem Volumenstrom des strömenden Gases, der in dem Bereich vorliegt, in dem die Schritte (1) Belegung, (2) Reaktion bzw. (3) Reinigung durchgeführt werden, und der freien Querschnittsfläche des entsprechenden durchströmten Bereichs zu verstehen. Besonders bevorzugt ist die mechanische Fluidisierung, die ohne zusätzlichen über die Inertisierung hinausgehenden Gaseinsatz, durch Flügelrührer, Ankerrührer, und sonstige geeignete Rührorgane erfolgt.

Der Reinigungsschritt (3) ist vorzugsweise durch Bewegung gekennzeichnet, wobei langsame Bewegung und geringes Durchmischen besonders bevorzugt ist. Die Rührorgane werden dabei bevorzugt so eingestellt und bewegt, dass ein Mischen und ein Fluidisieren, jedoch nicht völlige Verwirbelung, eintritt.

Während des Reinigungsschritts zur Abtrennung nicht reagierter Edukte sowie anfallender Nebenprodukte kann die Prozesstemperatur gegebenenfalls angehoben werden. Die Reinigung erfolgt vorzugsweise bei einer Temperatur von 100 °C bis 350 °C, bevorzugt 105 °C bis 180°C, besonders bevorzugt von 110 °C bis 140 °C.

Um Oxidation zu vermeiden und die Reinigung effektiver zu gestalten kann der Reinigungsschritt auch die Zufuhr größerer Mengen eines Schutzgases, vorzugsweise Stickstoff, Argon und andere Edelgase sowie Kohlenstoffdioxid, entsprechend einer Leerrohrgasgeschwindigkeit von vorzugsweise 0,001 bis 10 cm/s, bevorzugt 0,01 bis 1 cm/s umfassen.

Belegung, Reaktion und Reinigung können als diskontinuierlicher (Batch-Prozess) oder kontinuierlicher Prozess durchgeführt werden. Aus technischen Gründen bevorzugt ist eine kontinuierliche Reaktionsführung wie sie beispielsweise in EP1845136 beschrieben ist.

Zusätzlich können während der Modifizierung (d.h. während der Belegung und/oder Reaktion) oder im Anschluss an die Reinigung kontinuierliche oder diskontinuierliche Verfahren zur mechanischen Verdichtung der Kieselsäure eingesetzt werden, wie zum Beispiel Pressen, Presswalzen, Mahlaggregate, wie Kollergänge oder Kugelmühlen, Verdichtung durch Schnecken oder Schraubenmischer, Schraubenverdichter, Brikettierer, oder ein Verdichten durch Absaugen des Luft- oder Gasinhaltes durch geeignete Vakuummethoden.

Besonders bevorzugt ist die mechanische Verdichtung durch Presswalzen, Mahlaggregate wie Kugelmühlen, Schnecken, Schraubenmischer, Schraubenverdichter oder Brikettierer während der Belegung im Schritt (1). Belegung und mechanische Verdichtung erfolgen somit in einem Aggregat gleichzeitig, was aus Gründen der Raum/Zeitausbeute und zum Einsparen eines separaten Prozessschritts positiv ist.

In einer weiteren besonders bevorzugten Verfahrensweise werden im Anschluss an die Reinigung Verfahren zur mechanischen Verdichtung der Kieselsäure eingesetzt, wie Verdichten durch Absaugen des Luft- oder Gasinhaltes durch geeignete Vakuummethoden oder Presswalzen oder Kombination von beiden Verfahren.

Zusätzlich können die Kieselsäuren in einer besonders bevorzugten Verfahrensweise im Anschluss an die Reinigung vermahlen werden. Hierbei können Aggregate wie Stiftmühlen, Hammermühlen, Gegenstrommühlen, Prallmühlen oder Vorrichtungen zur Mahlsichtung zum Einsatz kommen.

Ein weiterer Gegenstand der Erfindung ist die Verwendung der erfindungsgemäßen oberflächenmodifizierten nanostrukturierten Kieselsäuren oder der nach dem erfindungsgemäßen Verfahren hergestellten oberflächenmodifizierten nanostrukturierten Kieselsäuren zur Steuerung der Fließeigenschaften von Medien wie Kleb-, Dicht- und Beschichtungsstoffen, zur Verbesserung der mechanischen Eigenschaften von Elastomeren sowie zur Steuerung der Ladungs- und Fließeigenschaften von Pulvern wie Tonern oder Pulverlacken. Die erfindungsgemäßen Kieselsäuren zeichnen sich durch eine stark verdickende Wirkung beispielsweise in polaren organischen Harzen aus. Bevorzugt ist die Verwendung zur Steuerung der rheologischen Eigenschaften von flüssigen Medien.

Überraschenderweise wurde festgestellt, dass die verdickende Wirkung der modifizierten Kieselsäuren gemessen als Viskosität der Dispersion nicht geringer, sondern häufig sogar höher ist, wenn dem Verfahren geringere Mengen Hilfsstoff zugesetzt werden (vgl. Beispiel 4 mit 1 bis 3, Beispiel 7 mit 6 und Beispiel 9 mit 8, in denen jeweils wässrige Ammoniaklösung als Hilfsstoff zugesetzt wurde). Gleiches gilt auch bei Verwendung von Triethylamin als Hilfsstoff (vgl. Beispiel 11 mit 10).

Mit Hilfe des erfindungsgemäßen Verfahrens werden Kieselsäuren zur Verfügung gestellt, die einen geringen Vernetzungsgrad auf der Oberfläche bei gleichzeitig fester chemischer Anbindung aufweisen und daher als Additiv eine gute Verdickungswirkung in flüssigen Medien erzielen. Das erfindungsgemäße Verfahren liefert eine optimale Kombination der Reaktionsparameter wie z.B. die Menge an eingesetztem Hilfsstoff und Reaktion im Gasphasenprozess, um diese möglichst hohe Verdickungswirkung bei gleichzeitig guter chemischer Anbindung zu erzielen.

## Analysemethoden:

### 1. Bestimmung des Kohlenstoffgehalts (%C)

Die Elementaranalyse auf Kohlenstoff erfolgte nach DIN ISO 10694 unter Verwendung eines CS-530 Elementaranalysators der Firma Eltra GmbH (D-41469 Neuss).

Aus dem ermittelten Wert kann unter Kenntnis der Modifizierungsart (d.h. Kenntnis von R aus $RSiO_{3/2}$, da davon u.a. %C und Molmasse $M$ abhängen) wie folgt der Beleggrad in $\mu$mol/m$^2$ des Metalloxids berechnet werden:

$$Beleggrad = 10^6 \times \frac{\%C(\exp) \times m(\text{gesamt})}{\%C(\text{RSiO}_{3/2}) \times M(\text{RSiO}_{3/2}) \times A_{spez} \times m(\text{Metalloxid})}$$

mit

$%C$(exp): experimentell ermittelter Kohlenstoffgehalt in Gew.%

$m$(gesamt): Gesamtmasse des oberflächenmodifizierten Metalloxids in g

$%C(\text{RSiO}_{3/2})$: theoretisch aus der entsprechenden Summenformel der Modifizierungsart errechenbarer Kohlenstoffgehalt der funktionellen Gruppe $RSiO_{3/2}$ in Gew.%

$M(\text{RSiO}_{3/2})$: molekulare Masse der funktionellen Gruppe $RSiO_{3/2}$ in g/mol

$A_{spez}$: spezifische Oberfläche des Metalloxids in m$^2$/g $m$(Metalloxid): Masse des nicht-oberflächenmodifizierten Metalloxids in g

wobei gilt:

$$m(\text{Metalloxid}) = m(\text{gesamt}) \times \left\{ 1 - \frac{\%C(\exp)}{100\%} - \frac{\%C(\exp)}{100\%} \times \frac{[100\% - \%C(\text{RSiO}_{3/2})]}{100\%} \right\}$$

Zur Vereinfachung wird hier die mit der Oberflächenmodifizierung einhergehende Gewichtszunahme in der groben Näherung $m$(Metalloxid) = $m$(gesamt) vernachlässigt, wodurch sich die Gleichung signifikant vereinfacht zu:

$$Beleggrad = 10^6 \times \frac{\%C(\exp)}{\%C(\text{RSiO}_{3/2}) \times M(\text{RSiO}_{3/2}) \times A_{spez}}$$

### 2. Bestimmung des Restgehalts an nicht modifizierten Kieselsäure-Silanolgruppen

Die Bestimmung des Rest-Silanolgehalts erfolgte analog G.W. Sears et al. Analytical Chemistry 1956, 28, 1981ff mittels Säure-Base-Titration der in einer 1:1-Mischung aus Wasser und Methanol suspendierten Kieselsäure. Die Titration erfolgte im Bereich oberhalb des isoelektrischen Punktes und unterhalb des pH-Bereichs der Auflösung der Kieselsäure.

Der Rest-Silanolgehalt in % kann demnach nach folgender Formel errechnet werden:

$$SiOH = SiOH(silyl)/SiOH(phil)*100\%$$

mit

    *SiOH*(phil): Titrationsvolumen aus der Titration der unbehandelten Kieselsäure
    *SiOH*(silyl): Titrationsvolumen aus der Titration der silylierten Kieselsäure

### 3. Bestimmung des Anteils an extrahierbarem Silyliermittel

2,50 g der zu untersuchenden Kieselsäure werden in einem PE-Schraubdeckelgefäß mit einem Spatel in 47,50 g Tetrahydrofuran eingerührt und das Gefäß anschließend verschlossen. Nach 30 min Ruhezeit im Eisbad wird die Mischung für 30 min im Ultraschallbad unter Eiskühlung behandelt (Sonorex Digitec *DT 156,* BANDELIN electronic GmbH & Co. KG, D-12207 Berlin) und anschließend durch Druckfiltration (5 bar Stickstoff) über einen PTFE-Membran-filter (Porengröße: 0,2 $\mu$m, Durchmesser: 47 mm, Sartorius AG, Göttingen) das klare Filtrat erhalten. Hiervon werden exakt 10,00 ml als Analysat zur Bestimmung des Siliziumgehalts mittels Atomabsorptionsspektroskopie (Atom Absorption Spectrometer 2100, Perkin Elmer Waltham, MA, USA) abgenommen und gewogen.
Die extrahierbaren Bestandteile in Gew.% können wie folgt berechnet werden:

$$Extrahierbare\ Bestandteile = 10^{-4} \times \frac{m(THF) \times V(\text{Analysat})}{m(\text{Metalloxid}) \times M(\text{Si})} \times \frac{c(\text{Analysat}) \times M(\text{RSiO}_{3/2})}{m(\text{Analysat})}$$

mit

    *m*(THF): Einwaage Tetrahydrofuran (= 47,50 g)
    *V*(Analysat): Volumen des Analysats (= 10,00 ml)
    *m*(Metalloxid): Einwaage des Oberflächenmodifizierten Metalloxids (= 2,50 g)
    *M*(Si): Molare Masse Silizium (=28,09 g/mol)
    *c*(Analysat): Siliziumgehalt des Analysats in mg/l
    *m*(Analysat): Auswaage des Analysats in g
    *M*(RSiO$_{3/2}$): molekulare Masse der funktionellen Gruppe RSiO$_{3/2}$ in g/mol

### 4. NMR-spektroskopische Charakterisierung

$^{29}$Si Festkörper NMR-Spektren wurden mittels Kreuzpolarisation und "Magic Angle Spinning" (CP/MAS) unter Verwendung eines NMR Spektrometer AVANCE 400 WB (Bruker Corporation, Billerica, MA, USA)ausgestattet mit einem 7 mm Doppelresonanz MAS-Probenkopf (Feldstärke 9,4 Tesla; Resonanzfrequenz für $^{29}$Si 79,51 MHz und 400,23 MHz für $^{1}$H) detektiert. Eine lineare Rampe von 80-100% wurde für die Protonen RF-Amplitude während der Kreuzpolarisation (CP) bei einer MAS Rotationsfrequenz von 5 kHz benutzt. Die Kontaktzeit betrug 5 ms. Bis zu 20000 Scans wurden mit einer Experimentwiederholzeit von 3 s aufgenommen (weitere Aufnahmeparameter: 90°Si-Puls = 5 $\mu$s, TD = 1662, SWH = 23809, o1= -5566 Hz, Entkopplung: TPPM15; Prozessierungsparameter: SI = 16384; Gaußmultiplikation mit LB = -5Hz und GB = 0,03). Alle Messungen erfolgten bei Raumtemperatur. Die $^{29}$Si chemischen Verschiebungen wurden auf Tetramethylsilan (TMS) = 0 ppm unter Verwendung von Oktakis(trimethylsiloxy)silsesquioxan (Q$_8$M$_8$, die am stärksten abgeschirmte Q$^4$-Gruppe liegt bei -109 ppm bezogen auf TMS) als externem Referenzstandard referenziert.
Die in Tabelle 2 angegebenen relativen Verhältnisse der T1-, T2 bzw. T3-Signale wurde aus den durch Deconvolution erhaltenen Signalintensitäten entsprechend folgender Formel berechnet:

$$^{29}Si\text{-}CP/MAS\ Tn = \frac{Int(\text{Tn})}{Int(\text{T1}) + Int(\text{T2}) + Int(\text{T3})} \times 100\%$$

mit

    n = 1, 2, 3
    *Int*(T1): Intensität des Signals der T1-Gruppe
    *Int*(T2): Intensität des Signals der T2-Gruppe

*Int*(T3): Intensität des Signals der T3-Gruppe

**5. Untersuchung des rheologischen Verhaltens der Metalloxide**

Jeweils 3 g der Reaktionsprodukte aus den Beispielen 1 bis 9, bzw. 8 g der Reaktionsprodukte aus den Beispielen 10 und 11, werden unter Umgebungsdruck in einem DISPERMAT® Vakuumdissolver der Firma VMA-Getzmann GmbH (D-51580 Reichshof) ausgestattet mit einer 40 mm Dissolverscheibe innerhalb von 1 bis 2 min bei 750 U/min in 97 g, bzw. 92 g für die Beispiele 10 und 11, Epikote RIM135, bezogen von Hexion Specialty Chemicals Inc. (Duisburg), eingearbeitet und anschließend 5 min bei 6000 U/min unter einem reduziertem Druck von 0,3 bar dispergiert.

Die Viskosität der Dispersion wird nach einer Stunde Ruhezeit mittels luftgelagertem Haake RheoStress 600 Rheometer (Thermo Fisher Scientific Inc., Waltham, MA , USA)mit Kegel-Platte-Geometrie (35 mm, 2°) bei 25 °C in Rotation gemessen. Zur Ermittlung der Viskosität wird dabei ein Messprofil bestehend aus zwei Abschnitten eingesetzt wobei zunächst 120 s bei 1 s$^{-1}$ (Messabschnitt 1) und anschließend weitere 120 s 10 s$^{-1}$ (Messabschnitt 2) geschert wird. Die in Tabelle 2 angegebene Viskosität wurde als Mittelwert der letzten zehn gesammelten Datenpunkte des zweiten Messabschnitts berechnet.

**Beispiele**

**Beispiel 1:**

Zu 100 g einer hydrophilen Kieselsäure mit einer spezifischen Oberfläche von 200 m$^2$/g, bestimmt nach der BET Methode entsprechend DIN 66131 und 66132 (erhältlich unter dem Namen HDK® N20 von Wacker Chemie AG, München, Deutschland) wird unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) eine Mischung bestehend aus 1,85 g Ammoniak und 3,75 g Wasser zugesetzt. Anschließend werden auf analoge Weise 21 g Hexadecyltrimethoxysilan zugefügt (Hohlkegeldüse, Modell 121, der Firma Düsen-Schlick GmbH, D-96253 Untersiemau/Coburg, 30° Sprühwinkel, 0,2 mm Bohrung, betrieben mit 5 bar Stickstoff). Die Reaktionsmischung wird für drei Stunden unter kräftigem Rühren auf 100 °C erhitzt und nach Abkühlen auf Raumtemperatur analysiert.

Die experimentellen Daten und Analysedaten sind in Tabelle 1 und 2 zusammengefasst.

**Beispiel 2:**

Zu 100 g einer hydrophilen Kieselsäure mit einer spezifischen Oberfläche von 200 m$^2$/g, bestimmt nach der BET Methode entsprechend DIN 66131 und 66132 (erhältlich unter dem Namen HDK® N20 von Wacker Chemie AG, München, Deutschland) wird unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) eine Mischung bestehend aus 1,25 g Ammoniak und 3,75 g Wasser zugesetzt. Anschließend werden auf analoge Weise 21 g Hexadecyltrimethoxysilan zugefügt (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff). Die Reaktionsmischung wird für drei Stunden unter kräftigem Rühren auf 100 °C erhitzt und nach Abkühlen auf Raumtemperatur analysiert.

**Beispiel 3:**

Zu 100 g einer hydrophilen Kieselsäure mit einer spezifischen Oberfläche von 200 m$^2$/g, bestimmt nach der BET Methode entsprechend DIN 66131 und 66132 (erhältlich unter dem Namen HDK® N20 von Wacker Chemie AG, München, Deutschland) wird unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) eine Mischung bestehend aus 0,66 g Ammoniak und 3,75 g Wasser zugesetzt. Anschließend werden auf analoge Weise 21 g Hexadecyltrimethoxysilan zugefügt (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff). Die Reaktionsmischung wird für drei Stunden unter kräftigem Rühren auf 100 °C erhitzt und nach Abkühlen auf Raumtemperatur analysiert.

**Beispiel 4:**

Zu 100 g einer hydrophilen Kieselsäure mit einer spezifischen Oberfläche von 200 m$^2$/g, bestimmt nach der BET Methode entsprechend DIN 66131 und 66132 (erhältlich unter dem Namen HDK® N20 von Wacker Chemie AG, München, Deutschland) wird unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) eine Mischung bestehend aus 0,22 g Ammoniak und 3,75 g Wasser zugesetzt. Anschließend werden auf analoge Weise 21 g Hexadecyltrimethoxysilan zugefügt (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff). Die Reaktionsmischung wird für drei Stunden unter kräftigem Rühren auf 100 °C erhitzt und nach Abkühlen auf Raumtemperatur analysiert.

**Beispiel 5:**

Zu 100 g einer hydrophilen Kieselsäure mit einer spezifischen Oberfläche von 200 $m^2$/g, bestimmt nach der BET Methode entsprechend DIN 66131 und 66132 (erhältlich unter dem Namen HDK® N20 von Wacker Chemie AG, München, Deutschland) wird unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) 3,75 g Wasser zugesetzt . Anschließend werden auf analoge Weise 21 g Hexadecyltrimethoxysilan zugefügt (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff). Die Reaktionsmischung wird für drei Stunden unter kräftigem Rühren auf 100 °C erhitzt und nach Abkühlen auf Raumtemperatur analysiert.

**Beispiel 6:**

Zu 100 g einer hydrophilen Kieselsäure mit einer spezifischen Oberfläche von 200 $m^2$/g, bestimmt nach der BET Methode entsprechend DIN 66131 und 66132 (erhältlich unter dem Namen HDK® N20 von Wacker Chemie AG, München, Deutschland) wird unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) eine Mischung bestehend aus 1,26 g Ammoniak und 3,78 g Wasser zugesetzt. Anschließend wird auf analoge Weise eine Mischung von 18,4 g Octadecyltrimethoxysilan und 15 g Toluol zugefügt (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff). Die Reaktionsmischung wird für drei Stunden unter kräftigem Rühren auf 120 °C erhitzt und nach Abkühlen auf Raumtemperatur analysiert.

**Beispiel 7:**

Zu 100 g einer hydrophilen Kieselsäure mit einer spezifischen Oberfläche von 200 $m^2$/g, bestimmt nach der BET Methode entsprechend DIN 66131 und 66132 (erhältlich unter dem Namen HDK® N20 von Wacker Chemie AG, München, Deutschland) wirdunter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) eine Mischung bestehend aus 0,28 g Ammoniak und 3,9 g Wasser zugesetzt. Anschließend wird auf analoge Weise eine Mischung von 18,6 g Octadecyltrimethoxysilan und 15 g Toluol zugefügt (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff). Die Reaktionsmischung wird für drei Stunden unter kräftigem Rühren auf 120 °C erhitzt und nach Abkühlen auf Raumtemperatur analysiert.

**Beispiel 8:**

Zu 100 g einer hydrophilen Kieselsäure mit einer spezifischen Oberfläche von 200 $m^2$/g, bestimmt nach der BET Methode entsprechend DIN 66131 und 66132 (erhältlich unter dem Namen HDK® N20 von Wacker Chemie AG, München, Deutschland) wird unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) eine Mischung bestehend aus 1,40 g Ammoniak und 5,03 g Wasser zugesetzt. Anschließend werden auf analoge Weise 21,9 g Tetradecyltrimethoxysilan zugefügt (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff). Die Reaktionsmischung wird für drei Stunden unter kräftigem Rühren auf 120 °C erhitzt und nach Abkühlen auf Raumtemperatur analysiert.

**Beispiel 9:**

Zu 100 g einer hydrophilen Kieselsäure mit einer spezifischen Oberfläche von 200 m$^2$/g, bestimmt nach der BET Methode entsprechend DIN 66131 und 66132 (erhältlich unter dem Namen HDK® N20 von Wacker Chemie AG, München, Deutschland) wirdunter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) eine Mischung bestehend aus 0,73 g Ammoniak und 4,96 g Wasser zugesetzt. Anschließend werden auf analoge Weise 21,9 g Tetradecyltrimethoxysilan zugefügt (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff). Die Reaktionsmischung wird für drei Stunden unter kräftigem Rühren auf 120 °C erhitzt und nach Abkühlen auf Raumtemperatur analysiert.

**Beispiel 10:**

Zu 60 g einer hydrophilen Kieselsäure mit einer spezifischen Oberfläche von 50 m$^2$/g, bestimmt nach der BET Methode entsprechend DIN 66131 und 66132 (erhältlich unter dem Namen HDK® N20 von Wacker Chemie AG, München, Deutschland) wirdunter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) eine Mischung bestehend aus 1,2 g Triethylamin und 0,75 g Wasser zugesetzt. Anschließend werden auf analoge Weise 2,4 g Methacryloxypropyltrimethoxysilan zugefügt (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff). Die Reaktionsmischung wird anschließend in einem Trockenschrank unter Stickstoffatmosphäre für drei Stunden auf 120 °C erhitzt und nach Abkühlen auf Raumtemperatur analysiert.

**Beispiel 11:**

Zu 60 g einer hydrophilen Kieselsäure mit einer spezifischen Oberfläche von 50 m$^2$/g, bestimmt nach der BET Methode entsprechend DIN 66131 und 66132 (erhältlich unter dem Namen HDK® N20 von Wacker Chemie AG, München, Deutschland) wird unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) eine Mischung bestehend aus 0,45 g Triethylamin und 0,75 g Wasser zugesetzt. Anschließend werden auf analoge Weise 2,4 g Methacryloxypropyltrimethoxysilan zugefügt (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff). Die Reaktionsmischung wird anschließend in einem Trockenschrank unter Stickstoffatmosphäre für drei Stunden auf 120 °C erhitzt und nach Abkühlen auf Raumtemperatur analysiert.

**Tabelle 1: Experimentelle Daten der erfindungsgemäßen Beispiele 1-11**

| Beispiel | Spezifische Oberfläche Metalloxid [m$^2$/g] | Belegmittel | Hilfsstoff | Menge Hilfsstoff[μmol] pro m$^2$ spezifische Oberfläche des Metalloxids |
|---|---|---|---|---|
| 1 | 200 | Hexadecyltrimethoxysilan | $NH_3$ (aq) | 5,4 |
| 2 | 200 | Hexadecyltrimethoxysilan | $NH_3$ (aq) | 3,7 |
| 3 | 200 | Hexadecyltrimethoxysilan | $NH_3$ (aq) | 1,9 |
| 4 | 200 | Hexadecyltrimethoxysilan | $NH_3$ (aq) | 0, 6 |
| 5 | 200 | Hexadecyltrimethoxysilan | $NH_3$ (aq) | 0,0 |
| 6 | 200 | Octadecyltrimethoxysilan | $NH_3$ (aq) | 3,7 |
| 7 | 200 | Octadecyltrimethoxysilan | $NH_3$ (aq) | 0,8 |
| 8 | 200 | Tetradecyltrimethoxysilan | $NH_3$ (aq) | 4,2 |
| 9 | 200 | Tetradecyltrimethoxysilan | $NH_3$ (aq) | 2,2 |
| 10 | 50 | Methacryloxypropyltrimethoxysilan | $NEt_3$ | 4,0 |

**EP 3 074 467 B1**

(fortgesetzt)

| Beispiel | Spezifische Oberfläche Metalloxid [m$^2$/g] | Belegmittel | Hilfsstoff | Menge Hilfsstoff µmol] pro m$^2$ spezifische Oberfläche des Metalloxids |
|---|---|---|---|---|
| 11 | 50 | Methacryloxypropyltrimethoxysilan | NEt$_3$ | 1,5 |
| NH$_3$(aq)=wässrige Ammoniaklösung<br>NEt$_3$=Triethylamin | | | | |

13

**Tabelle 2: Analysedaten der erfindungsgemäßen Beispiele 1-11**

| Beispiel | %C [Gew. %] | Beleggrad [μmol/m²] | %SiOH [%] | Extrahierbare Bestandteile [Gew.%] | 29Si-CP/MAS T1 [%] | 29Si-CP/MAS T2 [%] | 29Si-CP/MAS T3 [%] | Viskosität Dispersion [Pa*s] |
|---|---|---|---|---|---|---|---|---|
| 1 | 10,4 | 2,7 | 36 | 0,3 | 13 | 48 | 39 | 5,55 |
| 2 | 10,3 | 2,7 | 28 | 0,5 | 20 | 48 | 32 | 6,78 |
| 3 | 10,2 | 2,7 | 30 | 1,1 | 26 | 52 | 22 | 7,53 |
| 4 | 11,0 | 2,9 | 30 | 0,8 | 42 | 46 | 13 | 8,57 |
| 5 | 9,7 | 2,5 | 61 | 4,9 | 48 | 52 | 0 | 6,92 |
| 6 | 9,7 | 2,2 | 46 | 2,2 | 18 | 53 | 29 | 4,69 |
| 7 | 10,3 | 2,4 | 48 | 2,8 | 22 | 50 | 28 | 5,22 |
| 8 | 10,0 | 3,0 | 28 | 1,0 | 20 | 45 | 35 | 8,05 |
| 9 | 9,7 | 2,9 | 27 | 1,4 | 24 | 47 | 29 | 8,35 |
| 10 | 1,3 | 3,1 | 68 | 0,1 | 17 | 61 | 22 | 3,60 |
| 11 | 1,2 | 2,9 | 68 | 0,1 | 43 | 48 | 10 | 4,22 |

**Patentansprüche**

1.  Kieselsäuren, die mit Gruppen ausgewählt aus einer oder mehreren der Gruppen mit der allgemeinen Formel $RSi(OX)(OX')O_{1/2}$ (T1), $R'Si(OX'')(O_{1/2})_2$ (T2) und $R''Si(O_{1/2})_3$ (T3) modifiziert sind,

    wobei R, R', R'' ein aliphatischer oder aromatischer Kohlenwasserstoffrest mit 1 bis 24 C-Atomen und

    X, X' und X'' Wasserstoff, ein aliphatischer oder aromatischer Kohlenwasserstoffrest mit 1 bis 24 C-Atomen ist und

    R, R', R'', X, X' und X'' gleich oder verschieden sein können

    und wobei der Anteil an T1-Gruppen auf der Oberfläche der modifizierten Kieselsäure bezogen auf die Summe T1+T2+T3, mindestens 15% beträgt, oder der Anteil an T1-Gruppen auf der Oberfläche der modifizierten Kieselsäure größer ist als der Anteil an T3-Gruppen auf der Oberfläche der modifizierten Kieselsäure, die sich durch NMR-Spektroskopie im 29Si-CP/MAS-Modus bestimmen lässt,

    und wobei der mit Lösungsmitteln extrahierbare Anteil der modifizierten Kieselsäure höchstens 15 Gew.% beträgt.

2.  Kieselsäuren nach Anspruch 1, **dadurch gekennzeichnet, dass** es sich beim Rest R um Alkyl- oder Arylreste handelt.

3.  Kieselsäuren nach einem der Ansprüche 1 oder 2, **dadurch gekennzeichnet, dass** es sich bei der Kieselsäure um pyrogen hergestellte Kieselsäure handelt.

4.  Kieselsäuren nach einem der Ansprüche 1 bis 3, **dadurch gekennzeichnet, dass** der Beleggrad mindestens 2 $\mu$mol/m$^2$ der Oberfläche der Kieselsäure beträgt.

5.  Kieselsäuren nach einem der Ansprüche 1 bis 4, **dadurch gekennzeichnet, dass** der Anteil an T1-Gruppen auf der Oberfläche der erfindungsgemäßen modifizierten Kieselsäuren bezogen auf die Summe T1+T2+T3 mindestens 30% beträgt oder größer ist, als der Anteil an T3-Gruppen.

6.  Kieselsäuren nach einem der Ansprüche 1 bis 5, **dadurch gekennzeichnet, dass** der mit Lösungsmitteln extrahierbare Anteil höchstens 1 Gew.% beträgt.

7.  Verfahren zur Herstellung von oberflächenmodifizierten Kieselsäuren gemäß einem der Ansprüche 1 bis 6,

    wobei zunächst eine Kieselsäure mit einem Modifizierungsagens intensiv gemischt wird, die Kieselsäure dann mit dem Modifizierungsagens in einem Gasphasenprozess reagiert und anschließend von überschüssigem Modifizierungsagens und Nebenprodukten gereinigt wird,

    wobei das Modifizierungsagens ausgewählt wird aus einem Silan der allgemeinen Formel $RSiZ_3$, $R_2SiZ_2$ und/oder $R_3SiZ$ allein oder beliebigen Gemischen davon,

    wobei Z eine reaktive Gruppe wie beispielsweise Hydroxy, Halogen, Aminreste, $OR^X$, $OC(O)R^X$, $O(CH_2)_mOH$ oder $O(CH_2)_mOR^X$ bedeutet,

    R und $R^X$ Kohlenwasserstoffreste mit 1 bis 24 C-Atomen und m=1-24 ist,

    wobei 0,5 bis 7 $\mu$mol Modifizierungsagens pro m$^2$ spezifischer Oberfläche der zu modifizierenden Kieselsäure zur Modifizierung eingesetzt werden

    und wobei bei der Reaktion der Kieselsäure mit dem Modifizierungsagens Hilfsstoff in einer Menge von weniger als 3 $\mu$mol pro m$^2$ der Oberfläche der zu modifizierenden Kieselsäure zugesetzt wird.

8.  Verwendung der Kieselsäuren nach einem der Ansprüche 1 bis 6 zur Steuerung der rheologischen Eigenschaften von flüssigen Medien.

**Claims**

1.  Silicas modified with groups selected one or more of the groups having the general formula $RSi(OX)(OX')O_{1/2}$ (T1), $R'Si(OX'')(O_{1/2})_2$ (T2) and $R''Si(O_{1/2})_3$ (T3),

    where R, R', R'' are an aliphatic or aromatic hydrocarbon radical having 1 to 24 C atoms and

    X, X' and X'' are hydrogen or an aliphatic or aromatic hydrocarbon radical having 1 to 24 C atoms and R, R', R'', X, X' and X'' may be identical or different,

    and where the fraction of T1 groups on the surface of the modified silica, based on the sum of T1+T2+T3, is at least 15%, or the fraction of T1 groups on the surface of the modified silica is greater than the fraction of T3 groups on the surface of the modified silica, which may be determined by NMR spectroscopy in 29Si CP/MAS mode,

    and where the fraction of the modified silica that is extractable with solvents is not more than 15 wt%.

**2.** Silicas according to Claim 1, **characterized in that** the radical R comprises alkyl or aryl radicals.

**3.** Silicas according to either of Claims 1 and 2, **characterized in that** the silica comprises fumed silica.

**4.** Silicas according to any of Claims 1 to 3, **characterized in that** the degree of occupancy is at least 2 $\mu$mol/m$^2$ of the surface area of the silica.

**5.** Silicas according to any of Claims 1 to 4, **characterized in that** the fraction of T1 groups on the surface of the modified silicas of the invention, based on the sum of T1+T2+T3, is at least 30% or is greater than the fraction of T3 groups.

**6.** Silicas according to any of Claims 1 to 5, **characterized in that** the fraction that is extractable with solvents is not more than 1 wt%.

**7.** Method for producing surface-modified silicas according to any of Claims 1 to 6, where first of all a silica is mixed intensively with a modifying agent, and then the silica reacts with the modifying agent in a gas phase operation and is subsequently purified to remove excess modifying agent and byproducts,
where the modifying agent is selected from a silane of the general formula RSiZ$_3$, R$_2$SiZ$_2$ and/or R$_3$SiZ alone or any desired mixtures thereof,
where Z is a reactive group such as, for example, hydroxyl, halogen, amine radicals, OR$^X$, OC(O)R$^X$, O(CH$_2$)$_m$OH or O(CH$_2$)$_m$OR$^X$,
R and R$^X$ are hydrocarbon radicals having 1 to 24 C atoms,
and m is 1-24,
where 0.5 to 7 $\mu$mol of modifying agent per m$^2$ of specific surface area of the silica to be modified are used for the modification,
and where, in the reaction of the silica with the modifying agent, auxiliary is added in an amount of less than 3 $\mu$mol per m$^2$ of the surface area of the silica to be modified.

**8.** Use of the silicas according to any of Claims 1 to 6 for controlling the rheological properties of liquid media.

**Revendications**

**1.** Silices, qui sont modifiées avec des groupes choisis parmi un ou plusieurs des groupes ayant les formules générales RSi(OX)(OX')O$_{1/2}$ (T1), R'Si(OX'')(O$_{1/2}$)$_2$ (T2) et R'' Si(O$_{1/2}$)$_3$ (T3),
R, R', R'' représentant un radical hydrocarboné aliphatique ou aromatique de 1 à 24 atomes C, et
X, X' et X'' représentant l'hydrogène, un radical hydrocarboné aliphatique ou aromatique de 1 à 24 atomes C,
et R, R', R'', X, X' et X'' pouvant être identiques ou différents,
et la proportion de groupes T1 sur la surface de la silice modifiée par rapport à la somme T1+T2+T3 étant d'au moins 15 %, ou la proportion de groupes T1 sur la surface de la silice modifiée étant supérieure à la proportion de groupes T3 sur la surface de la silice modifiée, qui peut être déterminée par spectroscopie RMN en mode 29Si-CP/MAS,
et la fraction extractible avec des solvants de la silice modifiée étant d'au plus 15 % en poids.

**2.** Silices selon la revendication 1, **caractérisées en ce que** le radical R consiste en des radicaux alkyle ou aryle.

**3.** Silices selon l'une quelconque des revendications 1 ou 2, **caractérisées en ce que** la silice consiste en une silice fabriquée par voie pyrogène.

**4.** Silices selon l'une quelconque des revendications 1 à 3, **caractérisées en ce que** le degré de chargement est d'au moins 2 $\mu$mol/m$^2$ de la surface de la silice.

**5.** Silices selon l'une quelconque des revendications 1 à 4, **caractérisées en ce que** la proportion de groupes T1 sur la surface des silices modifiées selon l'invention par rapport à la somme T1+T2+T3 est d'au moins 30 % ou est supérieure à la proportion de groupes T3.

**6.** Silices selon l'une quelconque des revendications 1 à 5, **caractérisées en ce que** la fraction extractible avec des solvants est d'au plus 1 % en poids.

**7.** Procédé de fabrication de silices modifiées en surface selon l'une quelconque des revendications 1 à 6, selon lequel une silice est tout d'abord mélangée intensivement avec un agent de modification, la silice est ensuite mise en réaction avec l'agent de modification dans un procédé en phase gazeuse, puis débarrassée de l'agent de modification en excès et des produits secondaires, l'agent de modification étant choisi parmi un silane de formule générale $RSiZ_3$, $R_2SiZ_2$ et/ou $R_3SiZ$ seul ou des mélanges quelconques de ceux-ci,

Z signifiant un groupe réactif tel que par exemple hydroxy, halogène, des radicaux amino, $OR^X$, $OC(O)R^X$, $O(CH_2)_mOH$ ou $O(CH_2)_mOR^X$,

R et $R^X$ étant des radicaux hydrocarbonés de 1 à 24 atomes C, et m = 1 à 24,

0,5 à 7 $\mu$mol d'agent de modification par $m^2$ de surface spécifique de la silice à modifier étant utilisé pour la modification,

et, lors de la réaction de la silice avec l'agent de modification, un adjuvant étant ajouté en une quantité de moins de 3 $\mu$mol par $m^2$ de la surface de la silice à modifier.

**8.** Utilisation des silices selon l'une quelconque des revendications 1 à 6 pour l'ajustement des propriétés rhéologiques de milieux liquides.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008077814 A
- DE 102007055879 A1
- DE 102007033448 A1
- EP 1845136 A

**In der Beschreibung aufgeführte Nicht-Patentliteratur**

- **G. E. MARCIEL et al.** *Journal of Chromatography,* 1981, vol. 205, 438ff
- **G. ENGELHARDT et al.** *Polymer Bulletin,* 1981, vol. 5, 557ff
- **G.W. SEARS et al.** *Analytical Chemistry,* 1956, vol. 28, 1981ff